# EUROPÄISCHE PATENTSCHRIFT

(11) **EP 2 499 771 B1**
(45) Veröffentlichungstag und Bekanntmachung des Hinweises auf die Patenterteilung: **04.12.2019**
(21) Anmeldenummer: 10757589.6
(22) Anmeldetag: 22.09.2010
(51) Int. Cl.: H04L 5/00, H04H 20/61, G08C 17/02

(54) **SENDEEINHEIT FÜR MINDESTENS EIN MOBILES MIKROFONMODUL SOWIE MIKROFONSYSTEM MIT DER SENDEEINHEIT**
TRANSMISSION UNIT FOR AT LEAST ONE MOBILE MICROPHONE MODULE AND MICROPHONE SYSTEM WITH THIS TRANMISSION UNIT
ENSEMBLE DE TRANSMISSION POUR AU MOINS UN MICROPHONE ET SYSTÈME DE MICROPHONE AVEC LEDIT ENSEMBLE DE TRANSMISSION

(30) Priorität: 09.11.2009 DE 102009052299
(43) Veröffentlichungstag der Anmeldung: 19.09.2012
(73) Patentinhaber: Robert Bosch GmbH, 70442 Stuttgart (DE)
(72) Erfinder: KOCH, Hartwig, 31139 Hildesheim (DE); KIEHNE, Holger, 31224 Peine (DE); KLINGLER, Florian, 37073 Goettingen (DE); CIRCA, Radu, 31134 Hildesheim (DE); HOFMANN, Frank, 31139 Hildesheim (DE); SPREITZ, Gerald, 30880 Laatzen (DE); JAKOBLEW, Sascha, 31141 Hildesheim (DE)
(86) Internationale Anmeldenummer: PCT/EP2010/063938
(87) Internationale Veröffentlichungsnummer: WO 2011/054592

(56) Entgegenhaltungen:
- EP-A1- 1 646 215
- EP-A2- 1 499 047
- WO-A1-2008/110772
- WO-A1-2009/014716
- WO-A2-2007/052269
- DE-A1- 10 035 824
- US-A- 5 375 174
- US-A1- 2004 133 894
- US-A1- 2007 089 594
- US-A1- 2007 168 819
- US-A1- 2008 318 518

## Beschreibung

### Stand der Technik

Die Erfindung betrifft eine Sendeeinheit für mindestens ein mobiles Mikrofonmodul, wobei die Sendeeinheit zur drahtlosen Übertragung von Audioinformationen in einem Datenstrom von der Sendeeinheit zu einer Basisstation ausgebildet ist, mit mindestens einem Audiokanal, der zur Bereitstellung von mindestens einem Teil der Audioinformationen ausgebildet ist. Die Erfindung betrifft auch ein Mikrofonsystem mit dieser Sendeeinheit.

In der Veranstaltungstechnik werden zur Übertragung von Audiosignalen (Sprache, Gesang, Musikinstrumente) häufig drahtlose Übertragungssysteme eingesetzt. Üblicherweise werden deren Sendeeinheiten am Körper getragen und deren Mikrofone in die Kleidung oder das Musikinstrument (z.B. Saxophon) geklemmt, um dem Künstler einen erhöhten Bewegungsfreiraum zu ermöglichen. Das Mikrofon und die Sendeeinheit sind hierbei über ein Kabel verbunden. Bei anderen Ausführungsformen wird der Tonabnehmer eines Musikinstrumentes, z.B. einer E-Gitarre, als Audioquelle verwendet. Üblicher Weise wird das Audiosignal durch die Sendeeinheit über die drahtlose Übertragungsstrecke zu einem Empfänger übertragen und dort weiter verarbeitet, zum Beispiel an ein Mischpult übergeben.

Derartige Übertragungssysteme sind beispielsweise aus der Druckschrift DE 100 358 24 A1 bekannt. Diese Druckschrift offenbart ein System zur Steuerung von mobilen, drahtlos mit einer Zentraleinheit verbundenen Sende- und/oder Empfangsvorrichtungen, welche zum Beispiel bei drahtlosen Mikrofon-Monitor-Anlagen eingesetzt werden können. Bei dem vorgeschlagenen System wird ergänzend zu einer Audiosignalübertragung vorgeschlagen, eine bidirektionale Kommunikation zu etablieren, die den Austausch von Steuersignalen zwischen der Sendeeinheit und der Empfangseinheit möglich macht.

Die Druckschrift WO2009/014716 A1 offenbart ein mobiles Übertragungssystem für ein Fernsehteam oder dergleichen, wobei insbesondere in der Figur 3 zu erkennen ist, dass ein Reporter als "On-Air-Talent" eine tragbare Sendeeinheit trägt, welche einen einzigen Audiokanal an ein "Control-Panel" drahtlos sendet.

Die Druckschrift US 2008/0318518 betrifft ein Kopfhörersystem, welches über eine Funkverbindung Audioinformationen erhält, die von verschiedenen Quellen stammen können.

Die Druckschrift EP 1646215 A1 offenbart ein Mobiltelefonsystem mit Stereofunktionalität.

Die Druckschrift US 5375174 betrifft ein kabelloses Head-Set mit zwei Mikrofonen, welche in dem Lautsprecher des Kopfhörers angeordnet sind.

Die Druckschrift US 2007/0089594 offenbart ein Mikrofonanordnung für einen Sänger mit einer Gitarre, wobei die Mikrofonanordnung ein Mikrofon für den Sänger und ein Mikrofon für die Gitarre aufweist. Die Mikrofone sind über zwei Kabel mit einem stationären "Hub" verbunden, der die Audiosignale weiterverarbeitet. Die Druckschrift US 2004/0133894 stammt aus der gleichen Patentfamilie und offenbart ebenfalls eine Mikrofonanordnung.

Die Druckschrift WO 2008/110772 A1 beschreibt ein batteriebetriebenes und mobiles digitales Aufnahmegerät, insbesondere zur Aufnahme einer Gitarre oder anderer Saiteninstrumente. Das Aufnahmegerät weist ein Mikrofon auf, welches die Daten über eine Funkverbindung an eine Speichereinheit übermittelt.

Die Druckschrift WO 2007/052269 A2, die den nächstkommenden Stand der Technik bildet, beschreibt ein System mit mehreren Funkmikrophonen, welche datentechnisch mit einer Empfangseinheit verbunden sind, wobei die unterschiedlichen Funkverbindungen nicht miteinander interferieren.

### Offenbarung der Erfindung

Im Rahmen der Erfindung wird eine Anordnung mit den Merkmalen des Anspruches 1 sowie ein Mikrofonsystem mit den Merkmalen des Anspruches 10 vorgeschlagen. Bevorzugte oder vorteilhafte Ausführungsformen der Erfindung ergeben sich aus den Unteransprüchen, der nachfolgenden Beschreibung sowie den beigefügten Figuren.

Im Rahmen der Erfindung wird eine Anordnung mit einer Sendeeinheit und mit mindestens einem mobilen Mikrofonmodul vorgeschlagen, wobei die Sendeeinheit zur drahtlosen Übertragung von Audioinformationen in einem Datenstrom von der Sendeeinheit zu einer Basisstation ausgebildet ist. Die Anbindung des Mikrofonmoduls kann an die Sendeeinheit zum Beispiel über ein Kabel oder auch kabellos erfolgen, auch eine Integration des Mikrofonmoduls in der Sendeeinheit ist möglich. Unter einem Mikrofonmodul ist im Rahmen der Erfindung vorzugsweise jegliche Audiosignalaufnahmeeinrichtung zu verstehen, so zum Beispiel auch Tonabnehmer bei Musikinstrumenten. Eine erfindungsgemäße Ausführungsform der Anordnung mit der Sendeeinheit und des Mikrofonmoduls ist gegeben, wenn die Sendeeinheit tragbar an dem Körper eines Nutzers befestigt ist und das Mikrofon zum Beispiel zur Aufnahme von Sprache im Bereich des Kopfes oder zur Aufnahme von Audiosignalen auf oder an einem Musikinstrument angeordnet ist. Die Übertragung von durch das Mikrofonmodul aufgenommene Audiosignalen erfolgt nach der Wandlung in Audioinformationen drahtlos, vorzugsweise in einem VHF/UHF-Bereich und ermöglicht eine drahtlose Reichweite z.B. über mehr als 5 Meter, vorzugsweise mehr als 10 Meter und insbesondere über mehr als 15 Meter Entfernung.

Die Sendeeinheit weist mindestens einen Audiokanal auf, der zur Bereitstellung von mindestens einem Teil der Audioinformationen ausgebildet ist. Der Audiokanal ist insbesondere als ein Datenkanal in der Sendeeinheit zu verstehen.

Im Rahmen der Erfindung wird vorgeschlagen, dass die Sendeeinheit einen Multiplexer aufweist, welcher ausgebildet ist, die Audioinformationen aus mindestens zwei parallelen Audiokanälen in einen seriellen Datenstrom als die zu übertragenden Audioinformationen zu wandeln. Vorzugsweise wird der resultierende Datenstrom auf nur einer Sendefrequenz und/oder auf nur einem Sendekanal übertragen. Mit der Erfindung ist es somit möglich, über eine Sendeeinheit mehrere Audiokanäle datentechnisch mit der Basisstation zu verbinden.

Ein Aspekt der Erfindung liegt darin, dass es beispielsweise bisher üblich war, dass ein Sänger, der gleichzeitig E-Gitarre spielt, zwei Sender bei sich führen musste, einen für das Gesangsmikrofon und einen für die Gitarre. Durch die neuartige Sendeeinheit ist es nun möglich, die Übertragung mehrerer Audiosignale und/oder mehrerer Audioquellen parallel durchzuführen, so dass nur noch eine Sendeeinheit notwendig ist.

Durch die Erfindung wird auch erreicht, dass die Anzahl der Sendefrequenzen bei einem Parallelbetrieb von mehreren Sendeeinheiten verringert ist, da mehrere Audiokanäle und/oder mehrere Audioquellen jeweils in einer Sendeeinheit zusammengefasst werden und in einem Datenstrom, insbesondere auf einer einzigen Sendefrequenz und/oder einem einzigen Datenkanal übertragen werden. Nachdem gerade bei Großveranstaltungen, wie zum Beispiel Konzerten, Diskussionen etc. oftmals mehr als 40 oder 50 Audioquellen parallel übertragen werden müssen, ermöglicht die Erfindung eine Vereinfachung bei der Einrichtung der Mikrofonsysteme, da nur eine reduzierte Anzahl von Sendeeinheiten und damit von Sendefrequenzen für die Mehrzahl von Audioquellen aufeinander abgestimmt werden muss.

Bei einer bevorzugten Ausführungsform der Erfindung ist der Datenstrom als eine digitale Übertragung und/oder die Audiokanäle als digitale Audiokanäle ausgebildet. Durch die Nutzung einer digitalen Übertragungstechnik, insbesondere mit hoher Datenrate, ist es möglich, mehrere Audiokanäle parallel in einem seriellen Datenstrom zu übertragen. Wie nachfolgend noch erläutert wird, eröffnet die Erfindung auch die Möglichkeit, dass die unterschiedlichen Audiokanäle separat verarbeitet werden können, so dass die Datenrate und die Audioqualität für jeden Audiokanal individuell eingestellt werden kann.

Die Sendeeinheit umfasst mindestens zwei Eingangsschnittstellen, welche mit unterschiedlichen Audioquellen verbindbar sind, wobei die zwei Eingangsschnittstellen mindestens zwei Audiokanäle mit Audioinformationen versorgen. Durch diese Ausgestaltung ist es möglich, dass - wie bereits im Beispiel erwähnt - ein Nutzer sowohl Sprache bzw. Gesang als auch Instrumentalbegleitung aus zwei verschiedenen Audioquellen über eine Sendeeinheit übertragen kann. Dabei ist es zum einen vorstellbar, dass die Eingangsschnittstellen als analoge Eingangsschnittstellen ausgebildet sind, welche analoge Audiosignale aufnehmen. Bei alternativen Ausführungsformen ist es auch möglich, dass mindestens eine Eingangsschnittstelle als eine digitale Schnittstelle ausgebildet ist, die mindestens einen Audiokanal mit Audioinformationen versorgt.

Bei einer Weiterbildung der Erfindung umfasst die Sendeeinheit mindestens eine Eingangsschnittstelle mit mehreren Eingangskanäle einer einzigen Audioquelle, wobei die Eingangskanäle mehrere Audiokanäle mit Audioinformationen versorgen. Diese Weiterbildung ist vorteilhaft, wenn beispielsweise ein Stereosignal übertragen werden soll, wobei ein Eingangskanal für einen ersten Stereokanal und der andere Eingangskanal für einen anderen Stereokanal verwendet werden kann. Selbstverständlich ist es auch möglich, drei, vier oder mehr Eingangskanäle für entsprechend mehrkanalige Audioquellen (Quadrosound) bereit zu stellen.

In einer vorteilhaften Ausführungsform der Erfindung umfasst die Sendeeinheit ein Encodermodul, welches ausgebildet ist, Audiosignale ggfs. digitalisierte Audiosignale der Eingangsschnittstelle bzw. -schnittstellen in digitale Audioinformationen für die digitalen Audiokanäle zu encodieren. Nachdem es bevorzugt ist, dass der Datenstrom als eine digitale Übertragung ausgebildet ist, wird an dieser Position eine Enkodierung der Audiosignale umgesetzt, um eine Kanalsicherung bei der Übertragung zu erreichen.

Signaltechnisch ist es auch möglich, dass das die Sendeeinheit ein Multicarrier-Modul aufweist, welches ein Audiosignal auf mehrere der digitalen Audiokanäle aufteilt. Eine derartige Technik wird beispielsweise bei der Aufteilung eines Signals nach einem OFDM-Verfahren (Orthogonal-Frequency-Division-Multiplexing) eingesetzt, wobei jedes der orthogonalen Trägersignale einem eigenen Audiokanal zugeordnet wird. Bei abgewandelten Ausführungsformen können auch mehrere Trägersignale einem Audiokanal zugeordnet werden.

Zusammenfassend dargestellt ist es vorteilhaft, wenn die Audioinformationen in mehrere Audiokanäle bereitgestellt werden, da es bei Weiterbildungen der Erfindung möglich ist, diese Audiokanäle bedarfsgerecht zu parametrisieren und individuell hinsichtlich der Übertragungsparameter einzustellen.

Erfindungsgemäß weist die Sendeeinheit ein Audio-Kompressions-Modul auf, welches ausgebildet ist, die Audioinformationen der verschiedenen digitalen Audiokanäle kanalabhänging unterschiedlich zu komprimieren. So ist es beispielsweise möglich, ein weniger wichtigeres Signal, wie zum Beispiel ein Gitarrensignal, stärker zu komprimieren, als ein wichtigeres Signal, wie z.B. das Gesangssignal, da dies vom Publikum kritischer wahrgenommen wird.

Es liegt auch im Rahmen einer Weiterbildung der Erfindung, dass die Sendeeinheit ein Fehlerschutzmodul aufweist, welches ausgebildet ist, die Audioinformationen der digitalen Audiokanäle selektiv und/oder individuell, insbesondere unterschiedlich mit einem Fehlerschutz zu codieren, damit Störungen, die auf dem Übertragungskanal auftreten und die Daten stören würden, bei der Basisstation korrigiert werden können (Forward Error Correction). Dazu werden den Audioinformationen von dem Fehlerschutzmodul zusätzliche Informationen beigefügt, die dem Decodierer erlauben, Daten und Fehler voneinander zu trennen und zu korrigieren.

Vorzugsweise sind das Audio-Kompressions-Modul und das Fehlerschutzmodul als ein gemeinsames Modul, insbesondere als das Encodermodul ausgebildet. In der bevorzugten Ausführungsform der Erfindung ist das Encodermodul signaltechnisch vor dem Multiplexer angeordnet und/oder der Multiplexer ist so arrangiert, dass ein multiplexen der encodierten Audioinformationen erfolgt.

Bei einer besonders bevorzugten Ausführungsform der Erfindung weist die Sendeeinheit ein Steuerungsmodul auf, welches ausgebildet ist, jedem der digitalen Audiokanäle selektiv Übertragungsparameter, insbesondere für die Kompression und/oder den Fehlerschutz zuzuordnen. Mit dem Steuerungsmodul ist es möglich, den unterschiedlichen Audiokanälen, insbesondere den unterschiedlichen Audiosignalen, zum Beispiel die Datenrate und die Audioqualität individuell zuzuweisen.

Bei einer bevorzugten, anwendungsbezogenen Ausführungsform der Erfindung ist dieses Steuerungsmodul ausgebildet, die Übertragungsparameter anhand einer Prioritätenlisten oder einer Auswahlliste zuzuordnen. Dabei werden den Audiokanälen und/oder Audiosignalen höhere Prioritäten und damit z.B. eine niedrigere Kompression und/oder ein höherer Fehlerschutz zugeordnet, die im Betrieb der Sendeeinheit für das Publikum wichtiger sind, und anderen Audiokanälen, insbesondere Audiosignalen, eine höhere Kompression und/oder ein niedrigerer Fehlerschutz zugeordnet, bei denen Übertragungsfehler oder eine mindere Audioqualität eher akzeptiert werden können.

Das Steuerungsmodul ist insbesondere auch dafür verantwortlich, dass die Gesamtheit aller Audiokanäle so komprimiert und/oder fehlergeschützt werden, dass die Gesamtübertragungsrate der Sendeeinheit an die Basisstation nicht überschritten wird. Dabei kann eine konstante Zuordnung der Übertragungsparameter vorgesehen sein.

Es ist jedoch auch möglich, dass die Übertragungsparameter zeitlich variieren und/oder dynamisch geändert werden. Beispielsweise ist es möglich, dass ein Audiokanal, insbesondere ein Audiosignal, welches hinsichtlich der Amplitude unter einen vorbestimmten Grenzwert sinkt, eine niedrigere Priorität und/oder Übertragungsparameter mit einer geringeren Übertragungsrate zugeordnet werden, da dieser aktuell als inaktiv gewertet werden.

Es ist jedoch auch möglich, dass das Steuerungsmodul von extern, zum Beispiel über einen zusätzlichen Rückkanal oder über eine bidirektionale Verbindung, dynamisch in Betrieb, zum Beispiel von einem Tontechniker, geändert und angepasst werden kann, wenn im Verlauf des Betriebes festgestellt wird, dass die ursprünglich eingestellten Übertragungsparameter ungünstig sind.

Optional weist die Sendeeinheit und/oder das Mikrofonmodul eine Bedieneinheit auf, zum Beispiel einen Kipp- oder Drehschalter, ein Eingabefeld, einen Touchscreen oder ähnliches, über den die Audiokanäle, die Audiosignale und/oder die Eingangsschnittstellen unterschiedlich priorisiert werden können, sodass der Nutzer im Betrieb die Prioritäten z.B. zwischen Gesang und Instrumentalbegleitung nach Anforderung variieren kann.

Die Erfindung betrifft auch ein Mikrofonsystem mit einer Sendeeinheit nach einem der vorhergehenden Ansprüche bzw. wie sie zuvor beschrieben wurde, welches ergänzend mindestens eine Basisstation mit einem Demultiplexer aufweist, welcher ausgebildet ist, den seriellen Datenstrom in die früheren oder ursprünglichen digitalen Audiokanäle aufzuteilen.

Die Basisstation kann optional ein Modul zur Feststellung der Übertragungsqualität der einzelnen Audiokanäle aufweisen, welche beispielsweise über eine Fehlerbitrate oder eine Kanalfehlerbitrate umgesetzt wird, so dass ständig die Empfangsqualität der Audiokanäle überprüft werden kann. Gegebenenfalls können bei Abweichung der Empfangsqualität automatisiert oder durch manuellen Eingriff die Übertragungsparameter über den besagten Rückkanal dynamisch geändert werden und angepasst werden, um die Übertragungsqualität für selektierte Audiokanäle wieder zu verbessern.

Bei einer bevorzugten Weiterbildung der Erfindung weist die Basisstation ein Fehlerkorrekturmodul und/oder ein Dekompressionsmodul auf, welche gemeinsam als Decodermodul ausgebildet sind.

Bei einer möglichen Ausführungsform der Erfindung wandelt die Sendeeinheit die analogen Audiosignale in digitale Signale um und führt für jedes der digitalen Signale eine eigenständige Audiokompression durch. Danach werden die Daten mit einem individuellen Fehlerschutz belegt. Die Algorithmen und Parameter dieser Kompression und des Fehlerschutzes lassen sich hierbei für jeden Audiokanal individuell einstellen. Hierdurch ist es möglich, die verfügbare Datenrate auf die unterschiedlichen Audiokanäle aufzuteilen und einige Kanäle zu priorisieren. Das Hauptsignal, zum Beispiel ein Gesangssignal, kann somit mit einer höheren Audioqualität und einem besseren Fehlerschutz ausgestattet werden. Diese Verteilung kann entsprechend den Übertragungsparametern und der verfügbaren Datenrate für den Datenstrom, aber auch temporär, variieren, so dass zum Beispiel einer Audioquelle, wie zum Beispiel dem Gitarrensignal, stets eine minimale Datenrate zur Verfügung steht. Anschließend werden die digitalen Audiokanäle zu einem einzigen Datensignal als Datenstrom durch den Multiplexer vereinigt und über die kabellose Übertragungsstrecke zur Basisstation übertragen. Die Basisstation trennt die verschiedenen Audiokanäle voneinander, führt eine individuelle Fehlerkorrektur und Audiodekompression durch und leitet die resultierenden Audiokanäle und/oder Audiosignale an beliebige Verarbeitungseinheiten weiter.

Weitere Merkmale, Vorteile und Wirkungen der Erfindung ergeben sich aus der nachfolgenden Beschreibung eines bevorzugten Ausführungsbeispiels der Erfindung sowie der beigefügten Figur. Dabei zeigt:

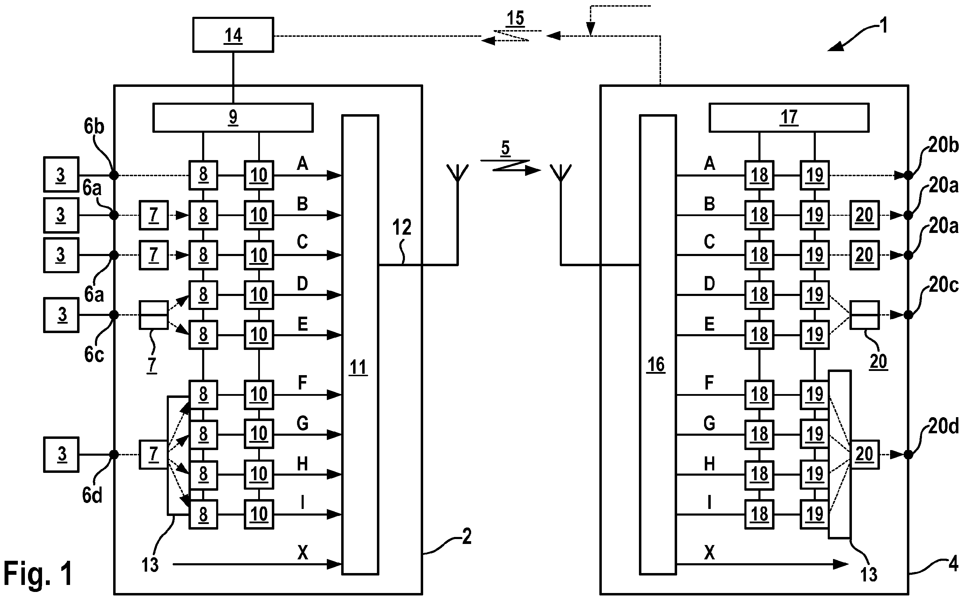

Figur 1 eine schematische Blockdarstellung eines Mikrofonsystems als ein Ausführungsbeispiel der Erfindung.

Die Figur 1 zeigt in einer stark schematisierten Darstellung ein Mikrofonsystem 1, welches eine Sendeeinheit 2, die mit einem oder mehreren Audioquellen 3 verbunden und/oder verbindbar ist, sowie eine Basisstation 4 umfasst. Die Basisstation 4 ist über eine drahtlose Übertragungsstrecke 5 mit der Sendeeinheit 2 verbunden ist, wobei über die Übertragungsstrecke 5 Audioinformationen der Audioquellen 3 übertragbar sind.

Derartige Mikrofonsystem 1 werden bei Diskussionen, Konzerten, Vorstellungen etc. eingesetzt. Beispielsweise wird die Sendeeinheit 2 direkt am Körper des Nutzers geführt, der als Audioquellen 3 z. B. über ein Mikrofonmodul, einen Audioausgang eines Instruments, z.B. einer elektrischen Gitarre, einem Clip-On-Mikrofon auf einem Instrument etc. verfügt. Die Steuereinheit 2 kann beispielsweise als ein Taschensender ausgebildet sein, und mit der oder den Audioquellen über Kabel verbunden sein.

Die Sendeeinheit 2 weist eine Mehrzahl von Eingangsschnittstellen 6a-d auf, die die Ankopplung von unterschiedlichen Audioquellen 3 ermöglichen. Bei anderen Ausführungsformen kann auch nur eine Auswahl der Schnittstellen 6a-d oder diese Schnittstellen in beliebiger Auswahl mehrfach vorgesehen sein. Eine erste Eingangsschnittstelle 6a ist als eine analoge Eingangsschnittstelle zur Übergabe eines analogen Audiosignals von einer Audioquelle 3, wie zum Beispiel einem Mikrofonmodul, ausgebildet. Dabei können auch mehrere derartige analoge Eingangsschnittstellen 6a vorgesehen sein. Die Eingangsschnittstelle 6b ist dagegen eine digitale Eingangsschnittstelle, die ein digitales Audiosignal entgegennehmen kann. Die Eingangsschnittstelle 6c weist dagegen mehrere Eingangskanäle einer Audioquelle 3 auf und ist beispielsweise als eine Stereoeingangsschnittstelle ausgebildet. Die Eingangsschnittstelle 6d ist wieder eine analoge Eingangsschnittstelle, die sich in der weiteren Verarbeitung von den Eingangsschnittstellen 6a unterscheidet.

Die Audiosignale der analogen Eingangsschnittstellen 6a, d werden zunächst in einen Analog-Digital-Wandler 7 geführt, welcher aus dem analogen Audiosignal ein digitales Audiosignal wandelt. Im Fall der Stereoschnittstelle 6c weist der Analog-Digital-Wandler zwei oder mehr Kanäle auf. Selbstverständlich ist es auch möglich, dass statt mehrerer unabhängiger Analog-Digital-Wandler 7 ein Multiplex-Analog-Digital-Wandler eingesetzt wird.

In der Sendeeinheit 2 liegen entweder vorab von der Eingangsschnittstelle 6b oder nach dem Analog-Digital-Wandlern 7 digitale Audiosignale vor. Die digitalen Audiosignale werden in Audiokanäle A-X überführt, wobei nach dem Analog-Digital-Wandler 7 der Eingangsschnittstelle 6c zwei Audiokanäle D-E vorgesehen sind. In dem Audiokanal A-X wird das digitale Audiosignal in ein Kompressionsmodul 8 geführt, welches eine Kompression der digitalen Audiosignale gemäß von Kompressionsparametern eines Steuerungsmoduls 9 durchführt. Nachfolgend oder gemeinsam mit der Kompression 9 wird ein Fehlerschutz 10 umgesetzt, der eine Fehlerkorrektur in der Basisstation 4 nach der Übertragungsstrecke 5 ermöglicht. Auch die Parameter des Fehlerschutzmoduls 10 werden von dem Steuerungsmodul 9 vorgegeben. Kompression 9 und Fehlerschutz 10 bilden gemeinsam ein Encodermodul für jeden der Audiokanäle A-X.

Die Audiokanäle A-X mit den komprimierten Audioinformationen werden nachfolgend in einen Multiplexer 11 geführt, welcher die parallelen Datenströme der Audiokanäle A-X in einen seriellen Datenstrom 12 wandelt, der nachfolgend im Rahmen der Übertragungsrate über die Übertragungsstrecke 5 an die Basisstation 4 übertragen wird.

Bei der analogen Eingangsschnittstelle 6d wird das digitale Audiosignal nach dem Analog-Digital-Wandler 7 in einem Multi-Carrier-Modul 13 auf mehrere digitale Audiokanäle F-I verteilt. Diese Technik ist beispielsweise als OFDM-Verfahren bekannt. Nach dem Multi-Carrier-Modul 13 liegen somit wieder eine Mehrzahl unabhängige Audiokanäle F-G vor, die jeweils ein Kompressionsmodul 8 und ein Fehlerschutzmodul 10 aufweisen.

Das Steuerungsmodul 9 ermöglicht es, die Übertragungsparameter, insbesondere die Übertragungsraten, den Kompressionsgrad und den Fehlerschutzgrad individuell und/oder selektiv für jeden einzelnen Audiokanal A-X, insbesondere unterschiedlich, einzustellen. Dadurch ist es möglich, wichtigere Audiokanälen A-X mit einer besseren Übertragungsrate, das heißt einer geringeren Kompression und einen höheren Fehlerschutz, zu versehen, als weniger wichtige Audiokanäle A-X. Die Einstellung der Übertragungsparameter in dem Steuerungsmodul 9 kann auf verschiedenen Wegen realisiert werden:
Eine erste Möglichkeit ist es, dass die Sendeeinheit 2 eine Bedieneinheit 14 aufweist, die beispielsweise als Knöpfe, Kippschalter etc. ausgebildet ist, die es erlauben, eine Priorisierung der Audiokanäle A-X und/oder der Eingangsschnittstellen 6a - d durch den Nutzer einzustellen. Eine andere Möglichkeit sieht vor, dass die Einstellung der Übertragungsparameter in dem Steuerungsmodul 9 über einen Rückkanal 15 realisiert ist, wobei die Übertragungsparameter von der Basisstation 4 oder sogar von einer anderen Position drahtlos eingestellt werden.

Nach der drahtlosen Übertragung wird der gemeinsame Datenstrom 12 in einem Demultiplexer 16 wieder auf die verschiedenen Audiokanäle A-X aufgeteilt, wobei nachfolgend, optional gesteuert durch ein weiteres Steuerungsmodul 17, eine Fehlerkorrektur in Fehlerkorrekturmodulen 18 und eine Audiodekompression in einem Dekompressionsmodul 19 erfolgt. Optional sind die Dekodierungsparameter mit den Encodierungs- und/oder Übertragungsparametern des Steuerungsmoduls 9 abgestimmt. Auch das mit dem Multi-Carrier-Modul 13 codierte Audiosignal der analogen Audioschnittstelle 6d wird in einem empfängerseitigen Multi-Carrier-Modul 13 zu einem resultierenden digitalen Audiosignal wieder zusammengefügt.

Nach einer Mehrzahl von Digital-Analogwandler 20 liegen an Ausgangsschnittstellen 21 a - d wieder die Eingangsaudiosignale vor. Selbstverständlich ist es möglich, dass das digitale Eingangssignal der digitalen Eingangsschnittstelle 6b in der Basisstation 4 über einen optionalen Digital-Analog-Wandler 20 auch in ein analoges Audioausgangssignal umgewandelt wird.

Mit dem Mikrofonsystem 1 ist es somit möglich, mehrere parallele Audiosignale über nur eine Sendeeinheit 2, welche an dem Körper eines Nutzers getragen werden kann, über die Übertragungsstrecke 5 auf nur einer Sendefrequenz oder auf nur einem Sendekanal zu der Basisstation 4 zu übertragen. Um die Übertragungsqualität individuell für jedes der Audiosignale einstellen zu können, erfolgt die Enkodierung individuell für jedes der Audiosignale oder sogar für jeden Audiokanal vor dem Multiplexer 11.

## Patentansprüche

1. Anordnung ausgebildet für ein Mikrofonsystem (1), wobei das Mikrofonsystem (1) bei Konzerten oder Vorstellungen eingesetzt wird,
mit einer Sendeeinheit (2),
wobei die Sendeeinheit mindestens zwei Eingangsschnittstellen (6a-d) umfasst, welche mit zwei unterschiedlichen Audioquellen verbunden sind, wobei die Eingangsschnittstellen (6a-d) mindestens zwei Audiokanäle (A-X) mit Audioinformationen versorgen,
mit mindestens einem ersten und einem zweiten Mikrofonmodul als die mindestens zwei Audioquellen, wobei das erste Mikrofonmodul zur Aufnahme von Sprache oder Gesang im Bereich eines Kopfes eines Nutzers und das zweite Mikrofonmodul zur Aufnahme von Audiosignalen auf oder an einem Instrument angeordnet ist,
wobei einer der mindestens zwei Audiokanäle (A-X) zur Bereitstellung von mindestens einem Teil der Audioinformationen (12) ausgebildet ist, wobei die Audiokanäle (A-X) als digitale Audiokanäle ausgebildet sind,
wobei die Sendeeinheit (2) tragbar an einem Körper des Nutzers befestigt ist und zur drahtlosen Übertragung von Audioinformationen (12) in einem Datenstrom von der Sendeeinheit (2) zu einer Basisstation (4) ausgebildet ist,
**gekennzeichnet durch**
einen Multiplexer (11), wobei der Multiplexer (11) ausgebildet ist, die Audioinformationen aus den mindestens zwei parallelen Audiokanälen (A-X) in einen seriellen Datenstrom als die zu übertragenden Audioinformationen (12) zu wandeln,
wobei die Sendeinheit ein Audiokompressionsmodul (8) aufweist, welches ausgebildet ist, Audioinformationen der digitalen Audiokanäle (A-X) kanalabhängig unterschiedlich zu komprimieren.

2. Anordnung nach Anspruch 1 , **dadurch gekennzeichnet, dass** der serielle Datenstrom (12) als eine digitale Übertragung sind.

3. Anordnung nach einem der vorhergehenden Ansprüchen, **gekennzeichnet durch** eine Eingangsschnittstelle (6c) mit mehreren Eingangskanälen einer einzigen Audioquelle (3), wobei die Eingangskanäle mehrere Audiokanäle (D,E) mit Audioinformationen versorgen.

4. Anordnung nach einem der vorhergehenden Ansprüche 2 oder 3, **gekennzeichnet durch** ein Encodermodul, welche ausgebildet ist, Audiosignale der Eingangsschnittstelle in digitale Audioinformationen der Audiokanäle (A-X) zu wandeln.

5. Anordnung nach einem der vorhergehenden Ansprüche, **gekennzeichnet durch** ein Multicarrier-Modul (13), welches ein Audiosignal auf mehrere der digitalen Audiokanäle (F-I) aufteilt.

6. Anordnung nach Anspruch 5, **dadurch gekennzeichnet, dass** das Multicarrier-Modul (13) zur Aufteilung nach einem OFDM-Verfahren ausgebildet ist.

7. Anordnung nach einem der vorhergehenden Ansprüche, **gekennzeichnet durch** ein Fehlerschutzmodul (10), welches ausgebildet ist, Audioinformationen der digitalen Audiokanäle selektiv und/oder kanalabhängig zu schützen.

8. Anordnung nach einem der vorhergehenden Ansprüche, **gekennzeichnet durch** ein Steuerungsmodul (9), welches ausgebildet ist, jedem der digitalen Audiokanäle (A-X) selektiv Übertragungsparameter, insbesondere für die Kompression und/oder den Fehlerschutz zuzuordnen.

9. Anordnung nach Anspruch 8, **dadurch gekennzeichnet, dass** das Steuerungsmodul (9) ausgebildet ist, die Übertragungsparameter anhand einer Prioritätenliste zuzuordnen.

10. Mikrofonsystem (1), ausgebildet für den Einsatz bei Konzerten oder Vorstellungen, mit einer Anordnung nach einem der vorhergehenden Ansprüche, **gekennzeichnet durch** eine Basisstation (4) mit einem Demultiplexer (16), welcher ausgebildet ist, den seriellen Datenstrom (12) in die früheren digitalen Audiokanäle aufzutrennen.

11. Mikrofonsystem nach Anspruch 10, **dadurch gekennzeichnet, dass** die Basisstation ein Dekompressionsmodul (19) und/oder eine Fehlerkorrekturmodul (18) aufweist, welche komplementär zu der dem Kompressionsmodul (8) bzw. dem Fehlerschutzmodul (10) ausgebildet ist.

## Claims

1. Arrangement designed for a microphone system (1), wherein the microphone system (1) is used for concerts or performances,
having a transmission unit (2),
wherein the transmission unit comprises at least two input interfaces (6a-d) connected to two different audio sources, wherein the input interfaces (6a-d) supply at least two audio channels (A-X) with audio information,
having at least one first and a second microphone module as the at least two audio sources, wherein the first microphone module is arranged in the region of a head of a user to pick up speech or singing and a second microphone module is arranged on or against an instrument to pick up audio signals,
wherein one of the at least two audio channels (A-X) is designed to provide at least some of the audio information (12), wherein the audio channels (A-X) are in the form of digital audio channels,
wherein the transmission unit (2) is mounted wear-ably on a body of the user and is designed to wirelessly transmit audio information (12) from the transmission unit (2) to a base station (4) in a data stream,
**characterized by**
a multiplexer (11), wherein the multiplexer (11) is designed to convert the audio information from the at least two parallel audio channels (A-X) into a serial data stream as the audio information (12) to be transmitted,
wherein the transmission unit has an audio compression module (8) designed to compress audio information of the digital audio channels (A-X) differently depending on the channel.

2. Arrangement according to Claim 1, **characterized in that** the serial data stream (12) are as a digital transmission.

3. Arrangement according to either of the preceding claims, **characterized by** an input interface (6c) having multiple input channels for a single audio source (3), wherein the input channels supply multiple audio channels (D, E) with audio information.

4. Arrangement according to either of preceding Claims 2 and 3, **characterized by** an encoder module designed to convert audio signals at the input interface into digital audio information of the audio channels (A-X).

5. Arrangement according to one of the preceding claims, **characterized by** a multicarrier module (13) that splits an audio signal over multiple instances of the digital audio channels (F-I).

6. Arrangement according to Claim 5, **characterized in that** the multicarrier module (13) is designed to split in accordance with an OFDM method.

7. Arrangement according to one of the preceding claims, **characterized by** an error protection module (10) designed to protect audio information of the digital audio channels selectively and/or depending on the channel.

8. Arrangement according to one of the preceding claims, **characterized by** a control module (9) designed to selectively assign each of the digital audio channels (A-X) transmission parameters, in particular for the compression and/or the error protection.

9. Arrangement according to Claim 8, **characterized in that** the control module (9) is designed to assign the transmission parameters on the basis of a priority list.

10. Microphone system (1), designed for use at concerts or performances, having an arrangement according to one of the preceding claims, **characterized by** a base station (4) having a demultiplexer (16) designed to separate the serial data stream (12) into the earlier digital audio channels.

11. Microphone system according to Claim 10, **characterized in that** the base station has a decompression module (19) and/or an error correction module (18) that is of complementary design to the the compression module (8) or the error protection module (10), respectively.

## Revendications

1. Ensemble formé pour un système de microphone (1), dans lequel le système de microphone (1) est utilisé lors de concerts ou de représentations,
avec une unité émettrice (2),
dans lequel l'unité émettrice comprend au moins deux interfaces d'entrée (6a-d), qui sont reliées à deux sources audio différentes,
dans lequel les interfaces d'entrée (6a-d) alimentent au moins deux canaux audio (A-X) avec des informations audio,
avec au moins un premier et un deuxième module de microphone constituant les au moins deux sources audio, le premier module de microphone étant disposé dans la région de la tête d'un utilisateur pour la captation de paroles ou de chants et le deuxième module de microphone étant disposé sur ou au niveau d'un instrument pour la captation de signaux audio,
dans lequel un des au moins deux canaux audio (A-X) est configuré pour la fourniture d'au moins une partie des informations audio (12), dans lequel les canaux audio (A-X) sont formés en tant que canaux audio numériques,
dans lequel l'unité émettrice (2) est fixée de façon portable à un corps de l'utilisateur et est configurée pour la transmission sans fil d'informations audio (12) dans un flux de données de l'unité émettrice (2) à une station de base (4),
**caractérisé par**
un multiplexeur (11), le multiplexeur (11) étant configuré pour convertir les informations audio provenant des au moins deux canaux audio parallèles (A-X) en un flux de données série en tant qu'informations audio (12) à transmettre,
dans lequel l'unité émettrice présente un module de compression audio (8), qui est configuré pour compresser des informations audio des canaux audio numériques (A-X) différemment en fonction du canal.

2. Ensemble selon la revendication 1, **caractérisé en ce que** le flux de données série (12) comme une transmission numérique.

3. Ensemble selon l'une quelconque des revendications précédentes, **caractérisé par** une interface d'entrée (6c) avec plusieurs canaux d'entrée d'une unique source audio (3), dans lequel les canaux d'entrée alimentent plusieurs canaux audio (D, E) avec des informations audio.

4. Ensemble selon l'une quelconque des revendications précédentes 2 ou 3, **caractérisé par** un module d'encodeur, qui est configuré pour convertir des signaux audio de l'interface d'entrée en informations audio numériques des canaux audio (A-X).

5. Ensemble selon l'une quelconque des revendications précédentes, **caractérisé par** un module multi-porteuses (13), qui partage un signal audio sur plusieurs des canaux audio numériques (F-I).

6. Ensemble selon la revendication 5, **caractérisé en ce que** le module multi-porteuses (13) est configuré pour le partage selon un procédé OFDM.

7. Ensemble selon l'une quelconque des revendications précédentes, **caractérisé par** un module de protection contre les erreurs (10), qui est configuré pour protéger des informations audio des canaux audio numériques de façon sélective et/ou en fonction du canal.

8. Ensemble selon l'une quelconque des revendications précédentes, **caractérisé par** un module de commande (9), qui est configuré pour attribuer de façon sélective à chacun des canaux audio numériques (A-X) des paramètres de transmission, en particulier pour la compression et/ou la protection contre les erreurs.

9. Ensemble selon la revendication 8, **caractérisé en ce que** le module de commande (9) est configuré pour attribuer les paramètres de transmission à l'aide d'une liste de priorités.

10. Système de microphone (1), formé pour être utilisé lors de concerts ou de représentations, avec un ensemble selon l'une quelconque des revendications précédentes, **caractérisé par** une station de base (4) avec un démultiplexeur (16), qui est configuré pour séparer le flux de données série (12) dans les canaux audio numériques antérieurs.

11. Système de microphone selon la revendication 10, **caractérisé en ce que** la station de base présente un module de décompression (19) et/ou un module de correction des erreurs (18), qui est complémentaire au le module de compression (8) ou au module de protection contre les erreurs (10).
